# EUROPEAN PATENT APPLICATION

(11) **EP 4 016 431 A1**
(43) Date of publication of application: **22.06.2022**
(21) Application number: 20214621.3
(22) Date of filing: 16.12.2020
(51) Int. Cl.: G06Q 30/02

(54) **COMPUTER IMPLEMENTED NEUROMARKETING RESEARCH METHOD**

(71) Applicant: Vilniaus Gedimino technikos universitetas, 10223 Vilnius (LT)
(72) Inventor: KAKLAUSKAS, Arturas, 08402 Vilnius (LT); BUCINSKAS, Vytautas, 10231 Vilnius (LT); DZEDZICKIS, Andrius, 14188 Vilnius (LT); URBAITE, Ieva, 03138 Vilnius (LT)
(74) Representative: Draugeliene, Virgina Adolfina

(57) **Abstract**

This invention relates to the methods and systems for data processing that have been specially adapted for commercial and management objectives. The invention encompasses an assessment of human emotional, affective and physiological parameters under investigation by employing neuro decision and neuro-correlation matrices along with Russell's circumplex model of emotion, hardware and its interfaces, the mathematical process of signal processing provided by sensors and the form of a real-time presentation of neuromarketing information. This system, which is given a name according to a mathematical method developed, operates reactions of one person or a group of persons or interest groups as well as to accumulate and summarize such reactions. This mentioned system can be employed for various kinds of studies in which human emotional and affective reactions as well as human physiological states are important.The method for implementing neuromarketing research by computer are provided with this invention.

## Description

### Technical field to which invention relates

This invention relates to the methods and systems for data processing that have been specially adapted for commercial and management objectives. Precisely this is for neuromarketing method and systems allowing an investigation of a reaction from a person who is interested in the material presented to him/her for marketing purposes.

Typically such material would be an interactive video. This invention allows changing the video according to short-term and medium-term reactions. Furthermore it determines the values of the respective advertising. Thereby it is possible to improve the advertising until it becomes the most attractive version for a specific viewer.

### Indication of the background art

Quite many technical resolutions in the neuromarketing field are currently known. These encompass technical decisions for establishing physiological parameters, describing the equipment and determining the equipment for the parameters. However, these do not directly involve the recommended method and the equipment designated for realizing it.

Document US20110301431A1 presents the methods for identifying reactions of the brain to provided stimuli which is based on a map of functioning brains, obtained by medical methods, used in direct, clinical practice. An evaluation of the effect on brains in accordance with their state of recognition allows the use of the composed map in neuromarketing research. This method submits a classification of specific cognitive states, which are applicable for neuromarketing and neuroeconomics. For example, it permits anticipating consumer behaviour and financial decision-making. A specific state of recognition becomes recognizable by employing a matrix comprising brain activities and their connectedness for which the method for obtaining them has not been fully detailed. Such a method is powerful and useful in non-clinical, neuro-marketing research. However, its applicability in practice would be extremely difficult to implement. The mechanisms for establishing brain activities are expensive and they require qualified, highly paid personnel. Furthermore there is no way to implement this method remotely. The proposed method is useful for neuromarketing and financial decision-making. However, it cannot be applied to determine different values of advertisements meant for explaining viewer reactions, feelings and wants more accurately. Therefore it would be desirable to have an upgraded method which would serve as the basis for submitting calculated product and advertising values that buyers and sellers would be able to view.

The description found in Document WIPO WO2015093926A1 regards the equipment applied for neuromarketing research and its operational processes. These include equipment that is similar to the one offered herein; however, here the results panel of evaluation from the stored data is submitted. The signals under investigation are derived with the use of an electroencephalogram (EEG) device, eye tracking devices, galvanic skin response devices and other bio-sensory devices. Next, the obtained data are connected to that panel, which afterwards, are employed for applying the neuro-marketing research method. The difference from the method offered here consists of the data processing using local resources (PC), use of more data variants and the fact that the basis for the method recommended herein consists of a dynamic evaluation of behavior according to Russell's circumplex model of emotion, rather than by the results panel of evaluation. The results panel of evaluation, which this method employs, require tremendous computational power that are hard to adapt to cyclical and targeted changes in the environment. This is an effective method for neuromarketing research. However, it cannot be applied as a method for creating new video advertisements and films that would prove effective economically or from the perspective of time. It is not applicable, when such a newly created video ad or film must, while in the process of producing the video ad or film, fully achieve the goals of its maker. This is when the playwrights, directors and producers of a screenplay determine the specific places within the ad that need to arouse among the viewers of such an ad an entire rainbow of emotions along with their respective strengths. Advertising and film-making industries still require straightforward methods and systems to make advertisements and films on a large scale that would be maximally adapted and attractive to consumers.
Inventor Lee (2009), holder of Patent US2011085700 (A1), has submitted a system designated for a neuromarketing purpose based on a comprehensive analysis of eye tracking. He took additional interest on their Regions of Interest (ROIs). This technology permits capturing integrated concentrations of consumer gazes at specific locations of an ad along with the overall distribution of their attention. Based on the informational bio-sensor data regarding the reactions of consumers, the neuromarketing processing system generates quantitative consumer models. Such quantitative models provide information, which includes consumer emotions along with their engagement, cognition and feelings. The information provided within the environment of consumers includes an advertisement, packaging, in-store marketing, and online marketing. The patent exhaustively describes this most serious method. It also differs from the method presented here by its concept regarding processing one's own data as well as for the amount of utilized data. However, this method does not propose moderate, strong and very strong statistical relationships that are repetitive between the variables under consideration, which might serve as the basis for describing the neuromarketing process accurately and objectively. For example, neuro correlations (statistical links) between an advertisement and the bio-sensor data of the subjects are not established in real time by applying probability theories or statistical methods. These would allow learning more about the effectiveness of an advertisement during each stage of its creation. It would help in determining the strengths and weaknesses of an advertisement, thereby perfecting it until it becomes the most attractive version for a certain viewer.

The systems and methods for establishing media effectiveness appear in the application for Patent US2017127113(A). The media and related data described in this patent may be stored in a medium database. Meanwhile one or more viewer reactions (physiological responses) can be stored in an appropriate database of reactions (maximum, minimum, means, deviations and others) as well as databases of respective comments and feedback. The Analysis Module performs a comprehensive analysis of viewer reactions to the medium or to its composite parts (e.g., scenes, events, sections, loud noises, provocative elements or females in scenes). Then this module divides them into different categories and submits useful insights about viewer reactions to the obtained information by means of graphic forms. This is intended to permit consumers to arrive at their own conclusions on how the media could/must be improved. This process involves analysing different demographic groups, e.g., elderly females as well as viewers with different income levels. Consumers are able to select a question, assignment or request of their interest for the purpose of receiving an answer. Such questions can be, e.g., at which points in the media did consumers provide the most commentaries and responses? Other examples might be: Did the information that the media provide have a happy ending? Do viewers believe that the happening (e.g., prank) is funny? Do the physiological data on viewers correspond with the commentaries and responses they provide? What is the reaction at the moment the brand appears? Which audience is best affected by the presentation of a specific product? The analysis module, which responds to such queries, considers all the information existing in the media databases (or in the database of some specific medium) along with different segments of people who had viewed the information including, but not limited to, males, females, players, Republicans, persons with industrial involvement or other categories. Such responses, insights and conclusions can be submitted to other consumers as well. The Analysis Module continues to improve over time due to its continual feedback from consumers. The Analysis Module uses the words provided in each comment as the basis for recounting the percentage of comments positively or negatively referencing the object in question, i.e., the product, event, logo, song, press spokesperson, anecdote, narrative, main events, storyline and the like, in every one of many categories, topics or aspects. Such categories, topics or aspects do not need to be predetermined. They can be taken from the analysis of consumer commentaries. The described method is useful in neuromarketing. However, it cannot be applied for determining the different values of advertisements, which would accurately describe consumer reactions, emotions and requests.

### Technical problem to be solved

The aim of the present invention is to increase the accuracy and reliability of research results, increase the reliability of interlinked data by assessing the data interlinks to establish the intensity levels of their interfaces and visualise the values of products, services, and advertisements calculated for both a buyer and a seller. The efforts here are to learn more, in real time, about the effectiveness of an advertisement at every stage of its creation, establish the strengths and weaknesses of an advertisement and improve it to the point that it becomes the most attractive version for a viewer.

### Essence of the invention

In order to solve the technical problem according to a proposed invention is that in a computer implemented neuromarketing research method, wherein an intensity of the impact from marketing materials are determined according to the emotional, affective and physiological states of a customer under investigation comprises:
- monitoring and decoding the emotional, affective and physiological states of the customer under investigation by a sensor set,
- transmitting decoded data by the sensor set into a data acquisition device for processing to convert the decoded data by the sensor set (2) to digital values that can be manipulated by the computer,
- storing processed data by the acquisition device into a computer's (5) memory bank from which the data transfers into a computer's data processor, which numerically evaluates the emotional, affective and physiological states of the customer under investigation as being parameters of the impact from marketing materials and then graphically visualizes these on a computer screen, wherein the numerical data evaluation being processed by computer's (5) data processor comprises following steps:
- processing of the data stored in the computer's memory bank by integrated evaluation of the emotional, affective and physiological states of the customer under investigation in order to form neuro decision matrix (9) from a data flow (7) processed by the data acquisition device, that makes neuro-decisions according to the significances of the emotions by performing a comparison of the impacts from the marketing research means on that customer's emotional, affective and physiological reactions,
- transmitting the data formed in the neuro decision matrix (9) according to the values of emotions into the computer's data processor (12), which forms a neuro-correlation matrix (10) that assesses the intensity of the impacts from the marketing materials on the emotions of the customer under investigation,
- processing of data formed in the neuro-correlation matrix (10) in the computer data processor (12) and expressing a graphic form of Russell's circumplex model of emotion along with their relevant statistical links among variables in diagram (11), which is displayed on the computer screen.

The evaluation of the integrated emotional, affective and physiological states is employed over the course of negotiations as well as when assessing results.

The method is applied for making the new video advertisement or film in cases, when the scriptwriters, directors or producers of the screenplay predetermine the array of emotions and their respective strengths that should be aroused in viewers in specific frames of the advertisement or film as well as determine the different values of the advertisements, films or products, services according to the emotional, affective and physiological reactions among consumers, while they are making the video advertisement or film.

The reading of data, in real time, is taken from affective, emotional and physiological sensors and displayed on integrated emotional, affective and physiological state maps along with their respective, numerical evaluations and neuro-correlations.

### Adventages of the Invention

The proposed invention is noteworthy for the accuracy and reliability of the research. This is accomplished by increasing the reliability of data interlinks while performing the assessment of the data interlinks and determining the level of intensity of their interfaces. This involves applying Russell's circumplex model of emotion as well as neuro decision and neuro-correlation matrices, which present the impact on the customer under investigation corresponding to a realistic impact caused by the marketing materials. These also permit establishing the impact of the presented marketing materials on the person under study and learning more about the effectiveness of an advertisement at each stage of its creation. Furthermore it helps to establish the strengths and weaknesses of an advertisement, thereby improving it until it becomes the most attractive variant for the viewer. It permits determining the utilitarian/instrumental, hedonistic, user-perceived and emotional values. According to these values, it permits changing the contents of the video materials, the duration of time showing the video and other parameters in a way that would result in the expected marketing effect to become best possible. One such criterion is Net Emotional Value (NEV), calculated from positive emotion estimates minus negative emotion estimates. Calculated GEV involves taking the average of the evaluations of positive emotions (like happy, satisfied, trusting, validated, serviced attentively, secure, focused, forgiving, stimulated, investigative, interested and energetic) and subtracting it from the average value of the negative emotions (like dissatisfied, overwhelmed frustrated, disappointed, annoyed, pressured, unhappy, ignored and rushed).

The greater value of the indicator corresponds with a better result from the effect. The method proposed herein along with the equipment necessary for implementing it permit performing the neuro-marketing research by applying methods that scientific studies substantiate. The instrumental data on measurements must be appropriately processed. Therefore this technical resolution calls for the use of a special means for processing data involving the application of a neuro decision matrix, which is designated for performing the multicriteria analysis by applying multicriteria analysis methods such as INVAR, COPRAS and the like. Thus it becomes possible to discover the optimal evaluation of the effect from using marketing materials. Applications of neuro-correlation matrices are performed to assess the interlinks between data along with the level of intensity of their respective interfaces. These matrices provide the greatest reliability of data links corresponding to the real impact of the marketing materials on the customer under investigation.

The utilitarian, hedonistic, user-perceived and emotional values of those marketing materials directly depend on the values and weights of the criteria system that describe them. Various methods of multicriteria analyses can be applied, when endeavouring to establish the price at which the marketing materials under assessment should be for them to be equally competitive on the market. Such an application is possible after thoroughly assessing all the positive and negative properties of alternatives under consideration as well as the marketing materials for their utilitarian/instrumental, hedonistic, user-perceived and emotional values. Methods of multicriteria analyses for use can include the Method for determining the efficiency and market value of objects, the Degree of Project Utility and Investment Value Assessment with recommendations (INVAR Method) and others. The proposed neuromarketing research system knows what a consumer feels at any time while viewing and interacting with any advertisement. The regularities of such interactions are also determined. For example, does a sadder mood overtake a consumer when sad music is being played? This could serve as a basis for adapting an advertisement to be shown with its same contents to other the same segmentation consumers as well. Data from some consumer's neurobiological signals may also be transmitted or displayed in a certain format to other consumers who are viewing an advertisement of the same or similar content. A viewer could be provided different types of advertisements or given a recommendation to watch such other types, which are pleasing to other consumers, with a very similar model of a consumer, e.g., when both consumers indicated nearly identical states of neurobiological signals while watching the very same advertisement.
The development of the neuromarketing research system method took place during the course of the scientific research, which consisted of two parts: analysis and evaluation of the impact of electronic advertising (advertising of the content being created) method and Intuitive method of electronic advertising broadcasting (an ad with already created contents).
The method of analyzing and evaluating the impact of electronic advertising (advertising of the content being created) allows greater learning about the effectiveness of an ad at each stage of its development and helps to improve it to achieve the variant that is most attractive to the viewer. This method assists in achieving an accurate response regarding which video clip has the greatest impact on short-term and long-term memory. Additionally it pinpoints, which clips cause the strongest impressions and feelings. Based on this method, it is possible to determine which video ad or its frame evokes the strongest impressions and feelings. The sum amount of arousal is the appropriate description of this action. The greater is the amount of arousal, the stronger is the feeling evoked by a certain frame of the video advertisement. Arousal can arise due to a strong motive or emotion from an ensuing stimulation of the central nervous system, e.g., akin to the effect caused by caffeine. Matters of interest to a person are perfectly memorable. The amount of forgotten material largely depends on its interest and relevance. Events that arouse strong emotions are better and longer remembered. The concept of emotional memory claims that emotionally significant events are better and more readily remembered than are trivial events. The dichotomy of memory means that memory is selective. People remember events that were emotionally experienced better than they can remember different kinds of happenings. Thus it can be claimed that the greater the emotional arousal a viewer experiences by watching a video advertisement, the better that particular advertisement will be remembered. The same can be said about positive as well as negative valence. The greater is the sum amount of positive and negative valence in absolute value, the better the viewer will recall that particular advertisement.

The broadcast of an intuitive electronic ad (an ad with already created contents) allows performing an assessment of an integrated, neurobiological response from the viewers and selecting, in real time, the most effective variant of an advertising broadcast. The screenwriters, directors and producers of a screenplay anticipate the array of emotions and their corresponding strengths that the video advertisement should arouse in viewers at specific frame within that ad, as they are in the process of creating it. A determination is made regarding the level to which the video frame of the advertisement achieved in reaching the maker's objectives. If the sum of a video advertisement or its separate frames aroused in viewers totalled no less than 90% of the state of neurobiological signals, i.e., the state of the neurobiological signals among viewers did not deviate from the predetermined plan by more than 10%, then it can be claimed the objectives of the advertisement-makers were fully achieved. This means the sum level of effectiveness was Rₑ>90%. Assuming the sum level of effectiveness of the advertisement is 80%<Rₑ<90%, then there is an average achievement of the objectives for that advertisement. This means the video advertisement should be improved. Assuming Rₑ<80%, then this advertisement absolutely must be improved. For example, if the makers of the advertisement had expected that a certain frame of the video advertisement under deliberation should evoke in viewers a specific affective feeling like boredom, interest or confusion or an emotion like happiness, sadness, anger, surprise, fear, disgust or neutrality, the arousal and valence along with their respective strengths of low, average or high. Assuming a viewer felt that video ideally as the makers of the advertisement want, then Rₑ=100%. Assuming a frame in a video advertisement evoked diametrically opposite affective and emotional states, arousal and valence among viewers than the makers had initially intended, then Rₑ=0%.
When the sum of the neurobiological signals among consumers, i.e., a consumer's emotional, affective and physiological states, valence and arousal exceed (fall short of) a threshold pertinent to the state of neurobiological signals, which some certain screenplay scriptwriter (or client ordering the video, director or producer) had set, the then the scriptwriter of the screenplay is informed about it.
The method of the Neuromarketing research system permits processing Big data automatically and providing digital recommendations, thereby improving the effectiveness of an advertisement. Recommendations can be provided by using different methods and systems relevant to recommendation provisions. Such methods and systems can include general filtering, content filtering, hybrid filtering, the INVAR method, multicriteria recommendation systems, risk-aware recommendation systems, mobile recommendation systems and hybrid recommendation systems.
We develop a method which presents below: Advertising product, service or idea are investigated by employing Neuro Decision Matrix and Neuro-correlation Matrix that are compiled by the use of a multiple criteria analysis. These present related, comprehensive data about the product, service or idea of an advertisement, the affective attitudes of that ad's viewers and their emotional and physiological states. This method makes it possible to economically accommodate an array of twelve or more layers of data obtained during the study consisting of more than 400 million anonymized data units. Over 60,000 average and strong correlations were discovered from this data relevant to the displayed contents and the respective emotional, affective and physiological states by employing the neuro decision matrix method. The neuro-correlations matrices were compiled next.

Based on these neuro decision and neuro-correlation matrices and the Russell's circumplex model of emotion (1980), the neuromarketing research system neuro-advertising model of emotions was developed. Its use is for compiling the maps of affective attitudes, emotional and physiological states of viewers relevant to the ad contents by market segments. For example, potential buyers have notable physiological parameters, which include facial temperature, eye pupil size and blinking frequency. These measures are provided according to their conditional fluctuation every 0.2 seconds. The change in facial temperature is measured by degrees, in eye pupils by millimetres and in blinking frequency by times blinked. The sum totals of the emotions of potential buyers on the emotional part of the map are pictured in terms of their conditional changes by percentage. Such emotions are meant to include happiness, neutrality, sadness, anger and surprise. These sorts of changes visually depict a viewer's rising/falling emotional, affective and physiological states pertinent to a frame within the video ad. These allow for greater accuracy and for obtaining an assessment of the effectiveness of the advertising cycle in real time without detaching the entire process of providing the creativity, broadcasting and impact.
In order to perform a detailed analysis of this research object, a method of a neuromarketing research system was developed that integrated the Damasio Somatic Marker Hypothesis (1994); neuro decision and neuro-correlation matrices; Russell's circumplex model of emotion (1980); biometric, physiological, affective computing and statistical analysis (LOGIT, KNN, MBP and RBP), decision-making, recommendations, Big Data and text analytics, forecasting techniques; analyses of categorical, spatial and individualized emotional content and map forms; neuro-self analysis and five multi-criteria analysis methods developed by these applicants.
For example, the data analytics and forecasting model, based on consumer models by advertisements viewed and by related data on neurobiological signals, can identify consumers who react very similarly to the same viewed advertisement. Furthermore this model then determines which advertisements interest the identified consumer the most and when - during the time of day (in the mornings, evenings or daytimes) and on a weekly basis (during working days or weekends) - along with various other trends. Further this information serves as the basis for providing personalized, digital recommendations.
The result of the neuromarketing research system and method is a comparative criterion for evaluating advertising, which is expressed by a number. It allows a comparison of the improvements made to an advertisement over the entire creative process or a comparison of the effectiveness relative to two different advertisements.
Despite this, the performance of the neuromarketing research systems' method is by an instrumental neuro-questionnaire. The method is suitable for negotiations in real time. The obtained responses are examined by the proposed method. An application of the Big Data method requires a time perspective, but it can also be used for a subsequent analysis of an array of data. Numerous alternatives of ad variants can be automatically generated by applying this method. It also makes it possible to analyze, in an integrated manner, a viewer's emotions, like happiness, sadness, anger, fright and disgust, as well as affective states like boredom, interest or confusion, valence, arousal and physiological states, such as facial temperature, pulse, breathing frequency and the like. Thereby it is possible to select, in real time, the most effective variant of an advertising broadcast. It is possible to upgrade the contents of a personalized advertisement being viewed, based on the data regarding the state of a consumer's neurobiological signals and on the multivariant design technique. Thus the advertisement can be revised to be more attractive and engaging. For example, the complexity level of the contents of an advertisement can be changed in consideration of a consumer's attention span and level of fatigue at the respective time.

### Brief descriptions of the drawings

Fig.1- illustrates the block diagram for realisation of proposed computer implemented neuromarketing research method;
Fig.2 - illustrates the course of processing data while forming the neuro decision matrix and neuro-correlation matrix;
Fig.3 - illustrates a block scheme indicating course of actions for realisation of proposed computer implemented neuromarketing research method.

### Example of the realization

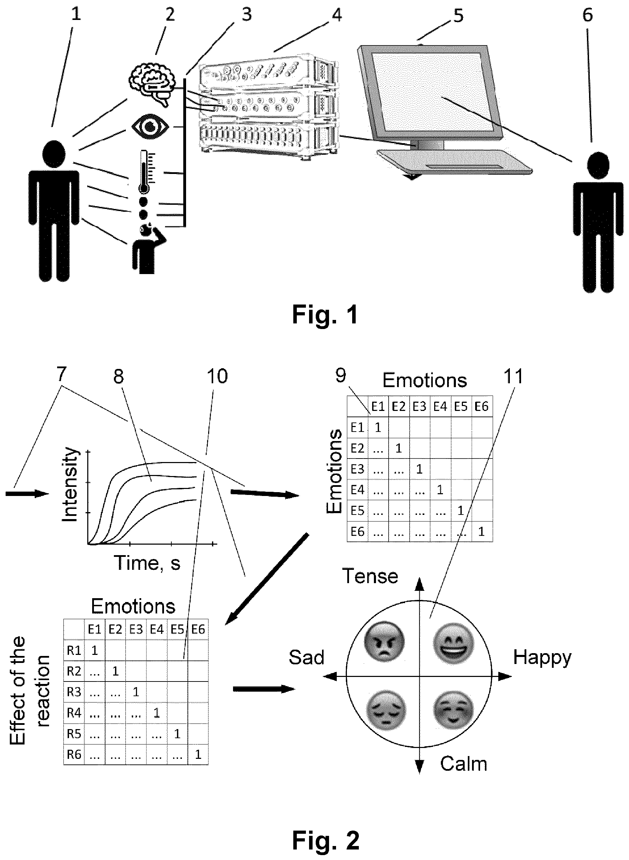

The system for realization of computer implemented neuromarketing research method shown in Fig. 1, which displays a customer 1 under investigation, who is subject to a research of his/her emotional, affective and physiological parameters during a neuro-marketing process. Sensor set 2 in real time monitors and detects his/her emotional, affective and physiological responses to the marketing information, which encompasses numerous emotional, affective and physiological reactions. Physiological sensors include the electroencephalography (EEG), eye tracking, temperature and dynamics of bodily parts, galvanic skin response. These emotional, affective and physiological sensors from sensor set 2 submit data into data transmittal trunk 3, which transmits data directly into data acquisition device 4 that registers and processes data. There the data are normalized converting them into digital data that can be manipulated by the computer 5 or by the computer cloud. The data transmittal trunk 3 connection between the data acquisition device 4 and the computer 5 can be standard (USB, Eth, WiFi) or specialized via an additional data channel for large amounts of data. The data in the computer 5 or in cloud are processed, stored and transmitted to the screen of operator 6, in real time, or for further data analysis.
The neuro-matrices formed by the data processing displayed in Fig. 2 are derived from the proposed method for implementing the neuromarketing research system of which a block diagram appears in Fig. 1. Here intensity describes how intense the emotional, affective and normalised, physiological states are among consumers. The normalized, physiological states are measured by pulse, breathing frequency, the size of the eye's pupil and the like. The measures of the emotional, affective and normalized, physiological states range from 0 (at 0, a consumer is in a calm state and his/her arousal equals 0) up to 1 (at 1, a consumer is feeling maximally strong emotions as well as affective and physiological states, and his/her arousal equals 1).
Data processing is administered from Flow 7 of emotional, affective and normalised, physiological data. These data originate from the sensor ser 2, and their presentation is as data in time which stores in a data mass storage 8. Then they are transmitted by computer interface to computer 5 processor. Neuro decision matrix 9 is formed according to an assigned discrete time, consisting of emotional, affective and physiological states and effects. This neuro decision matrix 9 compares the impacts of the marketing research means on the reactions of the customer's emotional, affective and physiological states. Such neuro-matrices, as a neuro decision matrix 9 and a neurocorrelation matrix 10, can be compiled once during a session or within a given time discretion that would illustrate dynamic changes in human reactions during a sales session. Next, neuro-correlation matrix 10 is formed from neuro decision matrix 9, which performs neuro-decision making, according to the data derived from data processor 12. Neuro-correlation matrix 10 presents the significance of the human response that is required for the final evaluation. Then, the data on the emotional, affective and normalised, physiological states among consumers from neuro-correlation matrix 10 are transmitted for processing to the processor 12, where the performed calculations are expressed to operator 6 in a convenient form, i.e., Russell's circumplex model of emotion Diagram 11, containing all the relevant statistical links between variables. This compact and responsive form illustrates the customer's 1 behavior and his/her motivational stimuli, thus revealing a map of emotional, affective and physiological states, as well as a neuro-matrices, all of which are needed for a successful sales process.

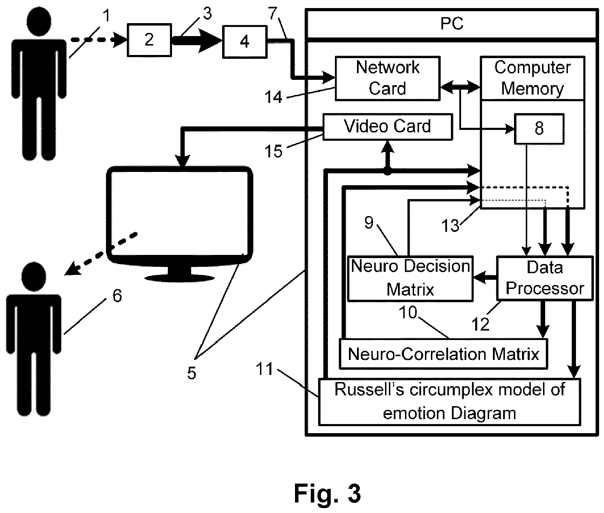

The proposed method for implementing a course of action for the neuromarketing research system are displayed in Fig. 3. The system goes into operation, once the parameters of emotional, affective and physiological states of the customer 1 have been measured by sensor set 2. The results obtained from data transmittal trunk 3 are transmitted to the data acquisition device 4. Therein the data normalise as they transform into digital data while transferring into memory 13 of computer 5 via network card 14. This network card stores data mass storage 8 that constitutes data on variables changing over time.
During data processing stage 1, data transfers from computer memory 13 to data processor 12. Here neuro-decision making neuro decision matrix 9 has formed while making neuro-decisions. These neuro-decisions indicate the probability and values of emotions occurring and the respective amount of probability that an emotion will appear. These data are then stored in the computer memory 13.

Stage 2 involves transmittal of the data from Neuro Decision Matrix 9 data into Data Processor 12, the location of Neuro-correlation Matrix 10, which determines the dependencies of customer's emotions and reactions from watching an ad. Then the obtained results are again stored into memory. Stage 3 involves sending the data from Neuro-correlation Matrix 10 to Data Processor 12, where Russell's circumplex model of emotion and the relevant statistical links among variables are formed for display in Diagram 11.

The obtained data are stored into computer memory 13 and transferred into video card 15. There, diagram 11, displaying Russell's circumplex model of emotion and its relevant statistical links between variables in a graphical form, is presented to Operator 6, which then appears on the screen of Computer 5. This visualization allows to learn more about the effectiveness of advertising at each stage of its development, helps to improve it to the most attractive option for the viewer.

The proposed structural, principal and operation diagrams (Figs 1, 2 and 3) are for processing the emotional, affective and physiological states relative to the neuro-marketing system. These are realized by connecting sensors and neuro-reactive sensors (for data on emotional, affective and physiological states) to a personal computer connected to the general computer network. The network signal transmits via data processing boards or directly via universal USB interfaces for further processing by unique software. Computer interfaces with big data systems, if such a need connects to a universal computer network.

The proposed neuromarketing research method obtain an integrated, emotional, affective and physiological state of the customer under investigation from the data collected by instrumental sensors of the parameters relevant to the, emotional, affective and physiological states. This is performed by processing the information in local computer and submitting such in the forms of Russell's circumplex model of emotion as well as neuro decision and neuro-correlation matrices. These forms permit formal assessments of the impact of the marketing materials on display, the dynamics of the reactions in real time and an ability to react to these.
Instrumental methods use an EEG device, eye tracking devices, galvanic skin response devices and other bio-sensory devices. The technology involved in tracking the eye permits tracing the integrated concentrations of consumer glances on certain points along with the overall distribution of attention. As an alternative to the verification data flow, there is a conscious response of the client to the questions formed after each video review, providing a balance of conscious - unconscious evaluation, expressed on a circular scale of emotional, affective and physiological states. The calculated values can be employed at once or accumulated for further processing by using an artificial intelligence system.
The evaluation of each demonstration results in a numerical amount, which is the weight of a summary criterion in the assessment system of emotional, affective and physiological states. This indicator is a criterion of quality. When creating an ad, the endeavor is to increase this number by demonstrating it and by selecting an alternative after multiple broadcasts.
The proposed method can be applied for determining the different values of advertisements and products or services. These can more accurately explain consumer emotional, affective and physiological reactions. The proposed method are economically effective as well as effective from a time perspective for creating a new video advertisement or film. This is done, when such a newly developed video advertisement or film must achieve the objectives of its makers in cases, where the scriptwriters, directors and producers of the storyline predetermine what array of emotions and the respective strengths of such emotions that the video advertisement or film must arouse among viewers in the specific frames of the advertisement, while they are engaged in making it.
The proposed method picture, in real time, emotional, affective and physiological data of consumers in a diagram containing Russell's circumplex model of emotion and its relevant statistical links between variables. Additionally it pictures the neuro-correlations (statistical links) between advertising and the biosensory data of subjects that have been predetermined by applying the probability theory or statistical methods. This permits learning more about the effectiveness of the advertising at each stage of its development and helps identifying the strengths and weaknesses of the advertisement. Thereby the advertisement can be improved until achieving the most attractive variant for a viewer. Russell's circumplex model of emotion allows deliberating numerous emotions, which depend on many environmental parameters, according to their location and strength. These emotions depend on numerous environmental parameters, including the level of lighting, colours, odours, pictures, information, news, data, assignments, learning materials, games, music, the video, temperature, humidity, air pollution and such. Such parameters must be expressed as equations, i.e., by the relevant statistical links among variables.

## Claims

1. Computer implemented neuromarketing research method, wherein an intensity of the impact from marketing materials are determined according to the emotional, affective and physiological states of a customer under investigation comprises:
- monitoring and decoding the emotional, affective and physiological states of the customer under investigation by a sensor set (2),
- transmitting decoded data by the sensor set (2) into a data acquisition device (4) for processing to convert the decoded data by the sensor set (2) to digital values that can be manipulated by the computer,
- storing processed data by the acquisition device (4) into a computer's (5) memory bank from which the data transfers into a computer's data processor, which numerically evaluates the emotional, affective and physiological states of the customer under investigation as being parameters of the impact from marketing materials and then graphically visualizes these on a computer screen,
**characterized in that** the numerical data evaluation being processed by computer's (5) data processor comprises following steps:
- processing of the data stored in the computer's memory bank by integrated evaluation of the emotional, affective and physiological states of the customer under investigation in order to form neuro decision matrix (9) from a data flow (7) processed by the data acquisition device, that makes neuro-decisions according to the significances of the emotions by performing a comparison of the impacts from the marketing research means on that customer's emotional, affective and physiological reactions,
- transmitting the data formed in the neuro decision matrix (9) according to the values of emotions into the computer's data processor (12), which forms a neuro-correlation matrix (10) that assesses the intensity of the impacts from the marketing materials on the emotions of the customer under investigation,
- processing of data formed in the neuro-correlation matrix (10) in the computer data processor (12) and expressing a graphic form of Russell's circumplex model of emotion along with their relevant statistical links among variables in diagram (11), which is displayed on the computer screen.

2. Method according to claim 1, **characterized in that** that the evaluation of the integrated emotional, affective and physiological states is employed over the course of negotiations as well as when assessing results.

3. Method according to claim 1, **characterized in that** the method is applied for making the new video advertisement or film in cases, when the scriptwriters, directors or producers of the screenplay predetermine the array of emotions and their respective strengths that should be aroused in viewers in specific frames of the advertisement or film as well as determine the different values of the advertisements, films or products, services according to the emotional, affective and physiological reactions among consumers, while they are making the video advertisement or film.

4. Method according to any one of the preceding claims, **characterized in that** that the reading of data, in real time, is taken from affective, emotional and physiological sensors and displayed on integrated emotional, affective and physiological state maps along with their respective, numerical evaluations and neuro-correlations.
